# EUROPEAN PATENT SPECIFICATION

(11) **EP 2 850 150 B1**
(45) Date of publication and mention of the grant of the patent: **28.09.2016**
(21) Application number: 13724020.6
(22) Date of filing: 10.05.2013
(51) Int. Cl.: C10C 5/00, C10K 1/04, C10K 1/08, B01D 1/06

(54) **METHOD FOR CONTROLLING THE WATER CONTENT IN PYROLYSIS LIQUIDS**
VERFAHREN ZUR KONTROLLE DES WASSERGEHALTS VON PYROLYSEÖLEN
PROCÉDÉ DE RÉGULATION DE LA TENEUR EN EAU DANS LES LIQUIDES DE PYROLYSE

(30) Priority: 16.05.2012 NL 2008835
(43) Date of publication of application: 25.03.2015
(73) Proprietor: BTG BIOLIQUIDS B.V., 7500 AV Enschede (NL)
(72) Inventor: VAN DE BELD, Lambertus, NL-7707 AM Balkbrug (NL); LEIJENHORST, Evert, Johannes, NL-7522 EJ Enschede (NL)
(74) Representative: van Kooij, Adriaan
(86) International application number: PCT/NL2013/050353
(87) International publication number: WO 2013/172705

(56) References cited:
- SE-C2- 522 021
- US-A1- 2007 261 296
- US-A1- 2011 139 597
- RH VENDERBOSCH ET AL: "Fast pyrolysis technology development", BIOFUELS, BIOPRODUCTS AND BIOREFINING, vol. 4, no. 2, 1 March 2010 (2010-03-01), pages 178-208, XP055053009, ISSN: 1932-104X, DOI: 10.1002/bbb.205

## Description

The present invention describes a method for controlling the water content in pyrolysis liquids. Further, the present invention relates to an apparatus suitable for carrying out the method.

Fast pyrolysis is a process in which organic materials are rapidly heated to 400 - 600 °C in the absence of air. Under these conditions, pyrolysis vapours, non-condensable gases and charcoal are produced. The vapours are condensed to a liquid. Typically, 50-75 wt.% of the feedstock is converted into a liquid. Pyrolysis offers the possibility of de-coupling of biomass conversion and pyrolysis liquid application (time, place and scale), easy handling of the liquids and a more consistent quality compared to any solid biomass. Pyrolysis liquid can be used in many different applications like for example boilers, engine, turbines or upgraded to transportation fuels.

The quality of the pyrolysis liquid depends on the type of feedstock, moisture content of the feed, process conditions etc. The water content of the liquid is an important parameter and typically can be as low as 15 wt% up to more than 30 wt%. The water content has a strong influence on for example the heating value and viscosity of the liquid. Furthermore, it is known that high water contents -typically > 28-30 wt%- will lead to a phase separated liquid: a heavy viscous organic phase and a low viscosity aqueous phase. Phase separation is a highly undesired situation.

For application and tradability of the pyrolysis liquid it is important that a fairly constant quality liquid can be produced independently of variations in for example feedstock, feedstock moisture content and actual process conditions. It is known that feedstock with higher ash or alkali content will lead to higher water content in the liquid with the risk that it will phase separate.

For reliable and continuous operation of any fast pyrolysis processes the production of constant quality liquid is also advantageous. In most processes a spray condensor is used to condense the liquids from the vapour phase by spraying pyrolysis liquids into the condensor. A liquid of fairly constant quality will result in a constant spraying pattern and constant liquid recovery yield. Additionally, the single phase liquid can be filtrated with relative ease as long as viscosity is not too high (i.e. low water content). Furthermore, single phase liquid gives less operational problems in heat exchangers and pumps. To avoid re-polymerisation reactions in the liquid, the temperature of the liquid is preferably kept below 60 °C. Re-polymerisation will lead to an increase in viscosity and eventually may lead to phase separation.

Therefore, it is concluded that having a method to control the water content in pyrolysis liquid is advantageous for both the pyrolysis process itself as well as for applications, further upgrading and tradability of the pyrolysis liquid.

Different approaches are possible to control the water content in pyrolysis liquid. Firstly, the liquid condenser can be operated on a higher temperature to reduce the condensation of water. By doing so also part of the organics are not condensed and overall yield is reduced. A second approach is to increase the gas load on the condenser which has the effect that more water leaves the condenser via the gas phase and less water is retained in the liquid phase. In both of the above cases, significant loss of organics will occur, and -in addition- all downstream equipment should handle a significant larger gas volume (gas cleaning etc).

By changing the moisture content of the feedstock also pyrolysis liquid with different water content could be obtained. However, this is not a suitable method to control the water content to an acceptable level as even with bonedry feedstock, it is possible to obtain pyrolysis liquid with too high water content (for example straw or empty fruit bunches). Still another approach is to obtain a low water content liquid by adding additional water to the liquid, forcing a phase separation obtaining a thick oily fraction and aqueous phase. However, the aqueous phase contains significant amount of organic compounds and only a low yield is obtained. Further, this method cannot be used to control the water content.

Another method to obtain a low water biomass derived pyrolysis liquid is by operating the condenser on a higher temperature avoiding water to condense, then drying the vapour phase in a separate step, and use the dry gas in the pyrolysis process as carrier gas. In particular, this is applicable to fluidized bed based fast pyrolysis, but is also results in a high loss of organic material.

Yet another approach is to produce a single phase pyrolysis liquid. In this approach, a phase separation suppression agent is added to promote the formation of a single phase condensed product. However, disadvantageously, in order to be effective, relative large amounts of agent are required and the water amount as such is not controlled.

SE 522 021 C2 discloses a process and system for the production of pyrolysis liquids with controlled water content, wherein biomass is subjected to a fast pyrolysis process, pyrolysis gases are condensed and water is removed from the resulting pyrolysis liquids through evaporation.

Accordingly, there is a need in the prior art to provide a method for the control of the water content in the pyrolysis liquid.

Therefore, it is a goal of the present invention, amongst other goals, to provide a method that does not present the drawback of known methods. This goal is achieved by the present invention, specifically by the method for controlling the water content in a pyrolysis liquid comprising:
a) producing a pyrolysis vapour comprising condensable compounds and non-condensable gases at a temperature equal to, or below 70°C and at a pressure equal to or below 1.5 bar;
b) introducing the vapour phase in a condenser, condensing the condensable compounds of the pyrolysis vapour to obtain a condensate at a temperature equal to, or below, 70° C and at a pressure equal to or below 1.5 bar, and separating the non-condensable gases from the condensate;
c) introducing at least part of the condensate into concentrator and concentrating said condensate by removing a certain amount of water at a temperature equal to, or below 80°C thereby obtaining a concentrate;
d) introducing the concentrate obtained after step c) into condenser and mixing it with the condensate present in condenser thereby obtaining a pyrolysis liquid with controlled water content.

In the context of the present invention, the pyrolysis vapour originates from a pyrolysis composition produced in a reactor. The pyrolysis composition comprises said vapour as well as a solid (such as a mixture of char and ash).

In the context of the present invention, the pyrolysis vapour is produced by a pyrolysis process. The pyrolysis process manufactures a pyrolysis composition at a temperature in the range 400-500°C. The vapour comprises condensable components and non condensable gases at a temperature equal to or below 70°C and at a pressure equal to or below 1.5 bar. The pyrolysis composition produced in a pyrolysis process may comprise a pyrolysis solid (sand, char & ash) that is primarily separated after the production of the pyrolysis composition, the pyrolysis vapour is separated from the pyrolysis composition (in step a)). In the context of the present invention, the pyrolysis composition can further comprise some carbonaceous solids (char, ash). The vapour in step a) can comprise some solid particles (e.g. bed material, char, ash or catalyst) that may be present in the condensate when condensing the vapour into a liquid. The solid particles can be removed from the liquid by filtration. In the context of the present invention, the pyrolysis composition can have various origins, such as vegetal origin.

In the context of the present invention, when the pyrolysis vapour is condensed, it becomes a pyrolysis liquid in step b).

In step c), at least part of the condensate is introduced in the concentrator. The expression "at least part of" is to be understood as at least a portion of the condensate, but it can also be almost all the condensate. Advantageously, the portion of the condensate introduced can be such as at least 10% by weight of the total weight of the whole condensate, at least 20% by weight, at least 30% by weight, at least 40% by weight, at least 50% by weight, at least 60% by weight, at least 70% by weight, at least 80% by weight, at least 90% by weight, at least 99% by weight.

In step d), when the concentrate obtained after step c) is mixed with the part of the condensate present in the condenser, the mixture is a pyrolysis liquid with a controlled/fixed amount of water. In step d), the treated liquid is returned to the condenser. This step allows obtaining a certain (pre-determined) water content in the condenser (a content which can be controlled independently of the pyrolysis composition produced in the pyrolysis process) and avoids phase separation of fresh oil in this condenser. It avoids operational difficulties in the condenser itself as well as in downstream processing, such as filtration.

A filtration step can be carried out after any of the steps b), c) or d).

In the context of the present invention, the condensable components are such as organic components (sugars, phenols, aromatic compounds, organic acids, ketones, aldehydes). The non-condensable gases are gases such as carbon oxide (CO), carbon dioxide (CO₂), methane, and nitrogen.

Operating the condenser at higher temperatures can be used to control the water content in the main product, but disadvantageously a significant loss in product yield is observed. Surprisingly, it was found that the loss of product can be reduced by a two-step approach: i) in the first step, pyrolysis liquids are condensed at a low temperature and ii) in a second step to evaporate part of the water from the pyrolysis liquid producing a pyrolysis liquid with a specific water content. This approach provides a robust method to control the water content in the liquid as integrated part of any fast pyrolysis process.

The condensation in step b) is carried out at a temperature equal to, or below 70°C, advantageously equal to or below 68°C, more advantageously equal to or below 65°C, even more advantageously equal to or below 60°C, most advantageously equal to, or below 50°C, even most advantageously equal to, or below 40°C. Further, the condensation in step b) is carried out at a temperature equal to, or above 10°C, advantageously equal to or above 15°C, more advantageously equal to or above 20°C, most advantageously equal to or above 30°C, even most advantageously equal to, or above 35°C. The condensation in step b) is advantageously carried out at a temperature in any range described by the above limits between 10°C and 70°C. Accordingly, the condensation in step b) can be carried out at any temperatures in the range 10°C and 70°C, such as at 10°C, 11°C, 12°C, 13°C, 14°C, 15°C, 16°C, 17°C, 18°C, 19°C, 20°C, 21°C, 22°C, 23°C, 24°C, 25°C, 26°C, 27°C, 28°C, 29°C, 30°C, 31°C, 32°C, 33°C, 34°C, 35°C, 36°C, 37°C, 38°C, 39°C, 40°C, 41°C, 42°C, 43°C, 44°C, 45°C, 46°C, 47°C, 48°C, 49°C, 50°C, 51°C, 52°C, 53°C, 54°C, 55°C, 56°C, 57°C, 58°C, 59°C, 60°C, 61°C, 62°C, 63°C, 64°C, 65°C, 66°C, 67°C, 68°C, 69°C, 70°C.

Accordingly, the goal of step b) is to collect the pyrolysis liquid and to separate the condensable components from the non-condensable gases in the conditions (temperature and pressure) described in step b). By condensating the condensable components, a condensate (also designated as a liquid) is formed. The pressure at which the condensation in step b) is carried out is around ambient pressure, such as about 1 bar, at most 1.5 bar. Advantageously, the pressure of the condensation in step b) is equal to, or below 1.5 bar.

In the context of the present invention, the condensate obtained in step b) comprises the condensable compounds. Advantageously, the condensate is free of non-condensable gases. The condensable compounds are any compound originating from the pyrolysis vapour and which are (at least partially) condensable at a temperature below, or equal to, 70°C and a pressure below 1.5 bar. The condensate according to the present invention also comprises water. The amount of water in the condensate comprises, in the context of the present invention, at least 15 % by weight of the total weight of the condensate, such as at least 20% by weight, such as at least 30% by weight, such as at least 40 % by weight, such as at least 50% by weight, such as at least 60% by weight, such as at least 70% by weight.

In step c), at least part of the condensate is introduced into the concentrator. In the context of the present invention, "part of the condensate" is to be understood any value between 5% and 95% of the total weight of the condensate, such as 5% by weight of the total weight of the condensate, 10% by weight of the total weight of the condensate, 20% by weight of the total weight of the condensate, 30% by weight of the total weight of the condensate, 40% by weight of the total weight of the condensate, 50% by weight of the total weight of the condensate, 60% by weight of the total weight of the condensate, 70% by weight of the total weight of the condensate, 80% by weight of the total weight of the condensate, 90% by weight of the total weight of the condensate, 95% by weight of the total weight of the condensate.

In step c) the concentration of the condensate by removing a certain amount of water is to be understood as the separation, or removal, of a certain amount of water from the condensate in order to obtain a pyrolysis liquid in step d) with desired water content. In other words, it means removing at least part of the water from the condensate. Advantageously, at most 80% by weight from the total weight of water in the condensate is removed, more advantageously at most 50% by weight, most advantageously at most 80% by weight.

In the context of the present invention, a "certain amount of water" is to be understood as the desired percentage, depending on the water content in the original pyrolysis composition, therefore the water content of the pyrolysis composition. The water percentage in the original depends on the source of the materials pyrolyzed. For example, when the water content in the pyrolysis vapour that is to be condensed has a high water content, more water is to be removed, than if the water content in the pyrolysis vapour is relatively lower.

In the context of the present invention, the concentrate obtained in step c) comprises the condensable compounds and has a lower or equal water content as the condensate The concentration in step c) is carried out at a temperature equal to, or below 80°C, advantageously equal to or below 75°C, more advantageously equal to or below 70°C, even more advantageously equal to or below 65°C, most advantageously equal to, or below 60°C, even most advantageously equal to, or below 55°C. Further step c) is carried out at a temperature equal to, or above 10°C, advantageously equal to or above 15°C, more advantageously equal to or above 20°C, most advantageously equal to or above 30°C, even most advantageously equal to, or above 35°C. Step c) is advantageously carried out at a temperature in any range described by the above limits between 10°C and 80°C. Accordingly, the concentration in step c) can be carried out at any temperatures in the range 10°C and 80°C, such as at 10°C, 11°C, 12°C, 13°C, 14°C, 15°C, 16°C, 17°C, 18°C, 19°C, 20°C, 21°C, 22°C, 23°C, 24°C, 25°C, 26°C, 27°C, 28°C, 29°C, 30°C, 31°C, 32°C, 33°C, 34°C, 35°C, 36°C, 37°C, 38°C, 39°C, 40°C, 41°C, 42°C, 43°C, 44°C, 45°C, 46°C, 47°C, 48°C, 49°C, 50°C, 51°C, 52°C, 53°C, 54°C, 55°C, 56°C, 57°C, 58°C, 59°C, 60°C, 61°C, 62°C, 63°C, 64°C, 65°C, 66°C, 67°C, 68°C, 69°C, 70°C, 71°C, 72°C, 73°C, 74°C, 75°C, 76°C, 77°C, 78°C, 79°C, 80°C.

In the context of the present invention, the quality of the pyrolysis material once the process has been carried out can be measured by in-line viscosity measurement, density measurement or water measurement.

According to the present invention, the condensation in step b) is carried out at a temperature in a range 5°C to 70°C, preferably 10°C to 60°C, more preferably 20°C to 50°C.

According to the present invention, the concentration step c) in carried out at a temperature in a range 10°C to 80°C, preferably 20°C to 70°C, more preferably 40°C to 70°C.

According to the present invention, the concentration in step c) is carried out at a pressure equal to, or below 500 mbar, preferably below equal to, or below 350 mbar, more preferably equal to, or below 250 mbar, most preferably equal to, or below 200 mbar. Accordingly, the concentration in step c) can be carried out at any pressure equal to or below 200 mbar, such as a pressure equal to or below 180 mbar, a pressure equal to or below 150 mbar, a pressure equal to or below 125 mbar, a pressure equal to or below 100 mbar, a pressure equal to or below 80 mbar, a pressure equal to or below 50 mbar. The concentration in step c) is carried out in a concentrator. A concentrator is container suitable for carrying out the concentration of a liquid. By concentration is to be understood the reduction of the amount of a particular compound. In the present invention, the concentration in step c) allows the reduction and control of the amount of water in the condensate. Advantageously, the pressure in step c) is equal to or below 180 mbar, more advantageously equal to, or below 170 mbar, most advantageously equal to, or below 150 bar.

According to the present invention, introducing the concentrate obtained after step c) into the condenser may also be carried out by spraying. In the context of the present invention, the concentrate obtained after step c) is circulated into the condenser. The circulation can be carried out by spraying. The concentrate contains less water and its introduction, or circulation (sometimes also designated as recirculation), allows controlling the amount of water in the pyrolysis liquid in the condenser. By spraying is to be understood by creating small droplets of the concentrate that are introduced in the condenser at high velocity, typically by a pump. The spraying advantageously occurs at the upper part of the condenser.

According to the present invention, the condensation in step b) is carried out in a condenser and the concentration in step c) is carried out in an evaporator. Advantageously, the evaporator is operated as a flash device and the energy for evaporation is provided by the pyrolysis liquid itself. An evaporator, in the context of the present invention, is a device used to turn (or allow to turn) the liquid form of a chemical into its gaseous form. The evaporator can be an evaporator chosen from the group natural/forced circulation evaporator, a falling film evaporator, a rising film evaporator, a climbing and falling film plate evaporators, a multiple-effect evaporator or a flash evaporator.

Natural circulation evaporators are based on the natural circulation of the product caused by the density differences that arise from heating. In an evaporator using tubing, after the water begins to boil, bubbles will rise and cause circulation, facilitating the separation of the liquid and the vapor at the top of the heating tubes. The amount of evaporation that takes place depends on the temperature difference between the steam and the solution. Problems can arise if the tubes are not well-immersed in the solution. If this occurs, the system will be dried out and circulation compromised. In order to avoid this, forced circulation can be used by inserting a pump to increase pressure and circulation. Forced circulation occurs when hydrostatic head prevents boiling at the heating surface. A pump can also be used to avoid fouling that is caused by the boiling of liquid on the tubes; the pump suppresses bubble formation. Other problems are that the residing time is undefined and the consumption of steam is very high, but at high temperatures, good circulation is easily achieved.

A falling film evaporator is generally made of long tubes (4-8 meters in length) which are surrounded by steam jackets. The uniform distribution of the solution is important when using this type of evaporator. The solution enters and gains velocity as it flows downward. This gain in velocity is attributed to the vapor being evolved against the heating medium, which flows downward as well. This evaporator is usually applied to highly viscous solutions so it is frequently used in the chemical, food, and fermentation industry.

In a rising film evaporator, boiling takes place inside the tubes, due to heating made (usually by steam) outside the same. Submergence is therefore not desired; the creation of water vapor bubbles inside the tube creates an ascensional flow enhancing the heat transfer coefficient. This type of evaporator is therefore quite efficient, the disadvantage being to be prone to quick scaling of the internal surface of the tubes. This design is then usually applied to clear, non-salting solutions. Tubes are usually quite long (4+ meters); sometimes a small recycle is provided. Sizing this type of evaporator is usually a delicate task, since it requires a precise evaluation of the actual level of the process liquor inside the tubes. Recent applications tend to favor the falling film pattern rather than this one.

Climbing and falling film plate evaporators have a relatively large surface area. The plates are usually corrugated and are supported by frame. During evaporation, steam flows through the channels formed by the free spaces between the plates. The steam alternately climbs and falls parallel to the concentrated liquid. The steam follows a cocurrent, counter-current path in relation to the liquid. The concentrate and the vapor are both fed into the separation stage where the vapor is sent to a condenser. This type of plate evaporator is frequently applied in the dairy and fermentation industries since they have spatial flexibility. A negative point of this type of evaporator is that it is limited in its ability to treat viscous or solid-containing products. There are other types of plate evaporators, which work with only climbing film. In the climbing film type much higher viscosities can be used compared to the climbing and falling film described above.

Unlike single-stage evaporators, multiple-effect evaporators can be made of up to seven evaporator stages or effects. The energy consumption for single-effect evaporators is very high and makes up most of the cost for an evaporation system. Putting together evaporators saves heat and thus requires less energy. Adding one evaporator to the original decreases the energy consumption to 50% of the original amount. Adding another effect reduces it to 33% and so on. A heat saving % equation can be used to estimate how much one will save by adding a certain amount of effects. The number of effects in a multiple-effect evaporator is usually restricted to seven because after that, the equipment cost starts catching up to the money saved from the energy requirement drop. There are two types of feeding that can be used when dealing with multiple-effect evaporators. Forward feeding takes place when the product enters the system through the first effect, which is at the highest temperature. The product is then partially concentrated as some of the water is transformed into vapor and carried away. It is then fed into the second effect which is a little lower in temperature. The second effect uses the heated vapor created in the first stage as its heating source (hence the saving in energy expenditure). The combination of lower temperatures and higher viscosities in subsequent effects provides good conditions for treating heat-sensitive products like enzymes and proteins. In using this system, an increase in the heating surface area of subsequent effects is required. Another way to proceed is by using backward feeding. In this process, the dilute products is fed into the last effect with has the lowest temperature and is transferred from effect to effect with the temperature increasing.

A flash evaporator or flash cooler can be seen as a combination of product cooling and concentrating. The hot liquid is fed to a vessel operating at low pressure and consequently vapors will be released until thermal equilibrium is achieved. The energy required for the evaporation is provided by the hot liquid causing a reduction in temperature of the liquid. This type of evaporator/cooler is often applied to viscous and sensitive fluids.

According to the present invention, step a) produces energy that can be used to carry out step c). Step a) is advantageously a pyrolysis process. More advantageously, the substance pyrolyzed is a biomass. Pyrolysis of biomasses, or biomaterials, produces char, liquids and gases from biomass by heating the biomass in a low/no oxygen environment. The absence of oxygen prevents combustion. The relative yield of products from pyrolysis varies with temperature. Temperatures of below 400 °C (752-932 °F) produce more char, while temperatures above 400 °C (1,292 °F) favor the yield of liquid and gas fuel components. Pyrolysis occurs more quickly at the higher temperatures, typically requiring seconds instead of hours. High temperature pyrolysis is also known as gasification, and produces primarily syngas. Typical yields from fast pyrolysis are 70% bio-oil, 15% biochar, and 15% gas. By comparison, slow pyrolysis can produce substantially more char (∼50%).

According to the present invention, a filtering step can be carried out after any one of steps b), c) or d). Advantageously, the filtration is carried out after step b) and/or after step c) and/or after step d). In the context of the present invention, the filtering step, also designated by the term "filtration" is the separation of solids from a liquid stream (condensate, concentrate or its mixture) by interposing a medium through which only the fluid can pass. Oversize solids in the fluid are retained, but the separation is not complete; solids will be contaminated with some fluid and filtrate will contain fine particles (depending on the pore size and filter thickness).

According to the present invention, the step a) is a pyrolysis process. It can be a slow pyrolysis, preferably it is a fast pyrolysis.

According to the present invention, step a) is the pyrolysis of a vegetal biomass, or residues, or waste streams (any organic material containing solid).

According to another aspect, the present invention relates to an apparatus for controlling the water content in a pyrolysis liquid comprising:
1) a condenser for a pyrolysis vapour comprising condensable compounds and non-condensable gases for obtaining the separation of the non-condensable gases from said vapour, said condenser comprises at least two intakes, wherein at least one of the at least two intakes comprises at least one inlet for receiving the condensable compounds of the pyrolysis vapour and said condenser comprises at least two discharge ends, said at least two discharge ends comprising at least one outlet, wherein at least one of the at least two discharge ends comprises at least one outlet for a non-condensable gases and wherein at least one of the at least two discharge ends comprises one outlet for a condensate, said condenser is operable a temperature equal to, or below 70°C, and at a pressure equal to or below 1.5 bar;
2) a concentrator connected to said outlet for the condensate from condenser for concentrating of said condensate by removing a pre-determined amount of water, said concentrator comprises at least one intake, said intake comprises at least one inlet for receiving the condensate produced in condenser and said concentrator comprises at least two discharge ends comprising at least one outlet, wherein at least one of the at least two discharge ends comprises at least one outlet for the concentrate connected to the condenser, said concentrator is operable a temperature equal to, or below 80°C, and at a pressure equal to or below 500 mbar, wherein condenser is connected to one of the outlet for the concentrate from said concentrator.

When describing pressure values, in the context of the present invention, the pressure (range) is to be understood as the absolute pressure.

In the context of the present invention, an intake is a part that allows components to enter a reactor, a condenser, a concentrator. An inlet is a subunit of the intake, such as a tube. A discharge end is a part that allows components to exit a reactor, a condenser, a concentrator. An outlet is a subunit of the discharge end, such as a tube. Inlets and outlets can be connected to temperature controls, heat exchangers, filters.

According to the present invention, the apparatus concentrator is an evaporator.

According to the present invention, the apparatus also comprises a reactor for producing a pyrolysis vapour placed before the condenser, said reactor comprises at least one intake and at least one discharge end, said at least one intake comprise at least one inlet and said at least one discharge end comprises at least one outlet for said vapour and wherein the condenser is connected to said outlet for said vapour from said reactor for obtaining the separation of the non-condensable gases from a condensate. Advantageously, a pyrolysis reaction is carried out in the reactor. The pyrolysis reaction produces a pyrolysis mixture comprising a solid phase (such as char and ash) and a pyrolysis vapour. The pyrolysis vapour comprises condensable components and the non-condensable gases as described in the context of the present invention.

According to the present invention, the condenser is connected to one of the outlet for the concentrate from said concentrator wherein the connection is located at the top of said condenser for spraying the concentrate obtained in the concentrator. The condenser is connected (by at least one intake comprising at least one inlet) to one of the outlet for the concentrate from said concentrator at the top of said condenser for spraying the concentrate obtained in the concentrator. It is to be understood that at least one of the intake of the condenser, comprising at least one inlet allows the concentrate to be introduced into the condenser.

The definitions and preferences described in the present application are applicable to all the aspects and embodiments of the present invention.

The present invention is further described, without being limited, by the following figures and Example.
- Figure 1: Scheme of the process according to the present invention
- Figure 2: kinematic viscosities as a function of the water content in the oil for two different temperatures
- Figure 3: Water evaporation rate as a function of the pressure in the evaporator
- Figure 4: Water content versus yield in a pyrolysis liquid
- Figure 5: Water content versus yield in a pyrolysis liquid

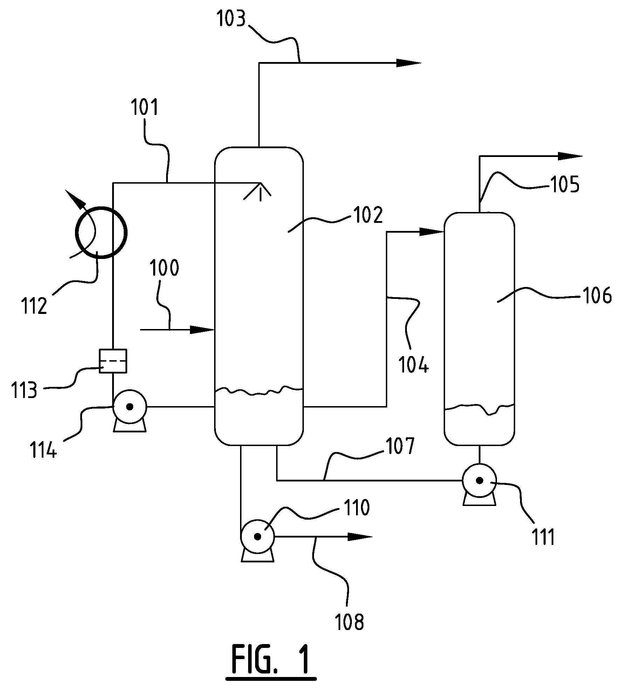

Figure 1 illustrates the method according to the present invention. Vapour stream **100** is generated in the fast pyrolysis process and fed to condenser **102** to condense the pyrolysis liquids. In this embodiment, the liquids are condensed by a spray of pyrolysis liquids **(101).** Heat is removed from recirculation stream **101** via heat exchanger **112.** Optionally, a filter **113** might be placed in the recirculation line **101** to remove particles from the pyrolysis liquid. Line **101** can be placed at the top of the condenser (with the purpose of spraying). Condenser **102** is typically operated at ambient pressure and a temperature between 20 and 50 °C. From the condensed pyrolysis liquid a second stream (also designated as a part of the condensate) **104** is fed to evaporator **106** which is for example a vacuum film evaporator. This evaporator is typically operated at temperatures between 40-70°C and a reduced pressure which may vary between 5 and 500 mbar. In the context of the embodiment illustrated in figure 1, the concentrator is an evaporator (the concentrate can therefore be designated as an evaporate). The operating pressure of the evaporator **106** can be used to control the water evaporation rate. Pyrolysis liquid with a reduced water content **(107),** also designated as a concentrate (or an evaporate), is send back to the main condenser, and mixed with the pyrolysis liquid present in condenser **102.** The product - pyrolysis liquid containing a controlled amount of water- is removed from the condenser via **108.** A water rich vapour stream **105** is removed from the top of the evaporator **106.**

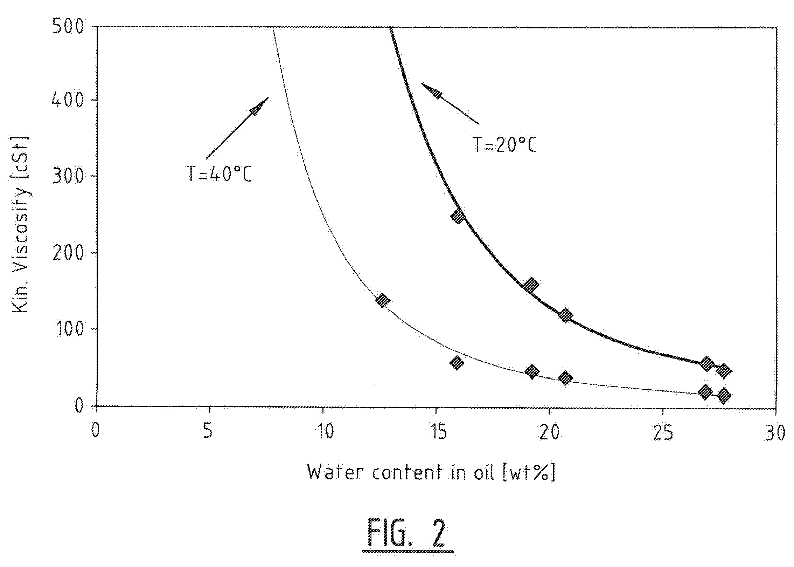

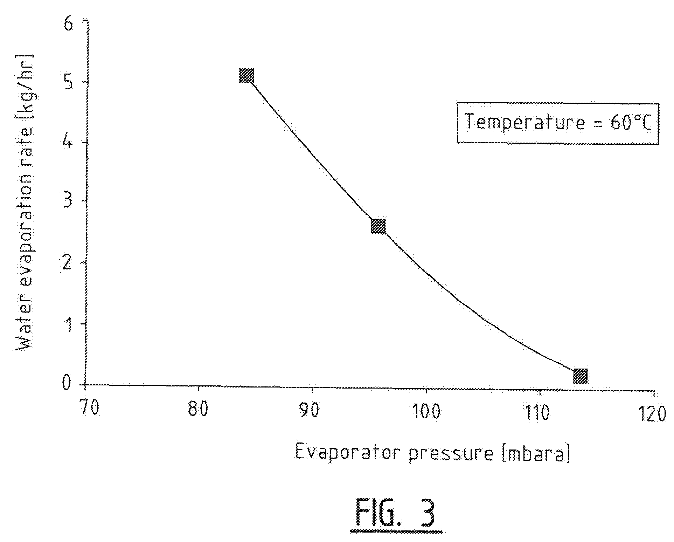

Different methods exist to control the water evaporation rate in the evaporator **106** as for example the operating pressure, operating temperature and surface area. The required water evaporation rate is determined by the actual pyrolysis liquid quality present in the condenser **102** which is equivalent with the liquid in stream **101** and **104.** Actual water content of the pyrolysis liquid might be determined in-line by a suitable device. As an alternative to direct water measurement and practical approach the viscosity and temperature of the pyrolysis liquid is determined in-line for which several instruments are on the market. A strong relation exists between the water content in the oil and the viscosity as illustrated in Figure 2. In Figure 3 it is shown that the water evaporation rate can be very well controlled by the pressure in the evaporator. Operating the evaporator under reduced pressure has the advantage that the pyrolysis liquid temperature can be kept at a relative low temperature avoiding or minimizing re-polymerisation reactions in the liquid. In figure 1, features **110, 111** and **114** represent pumps and **103** represents the stream of non-condensable gases. From the evaporator **106** is produced the water rich vapour **105.**

### Examples

### Example 1:

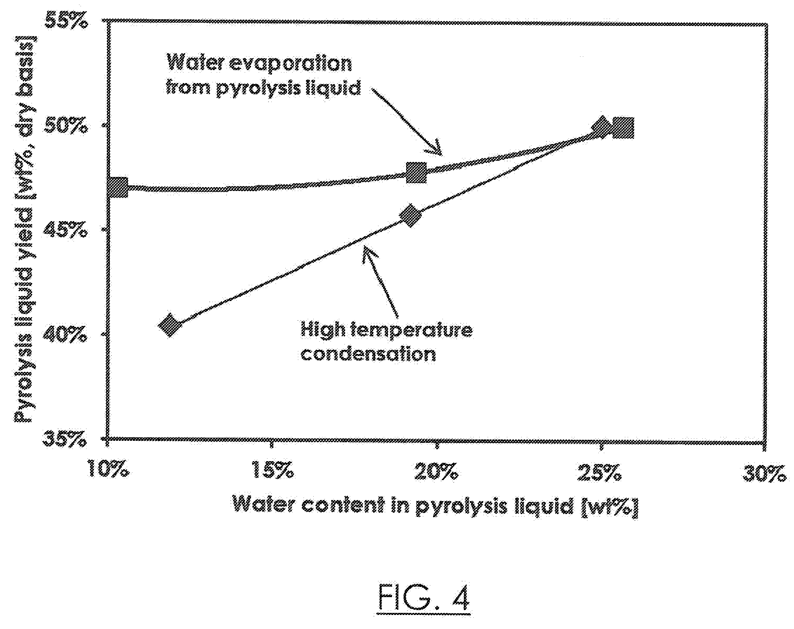

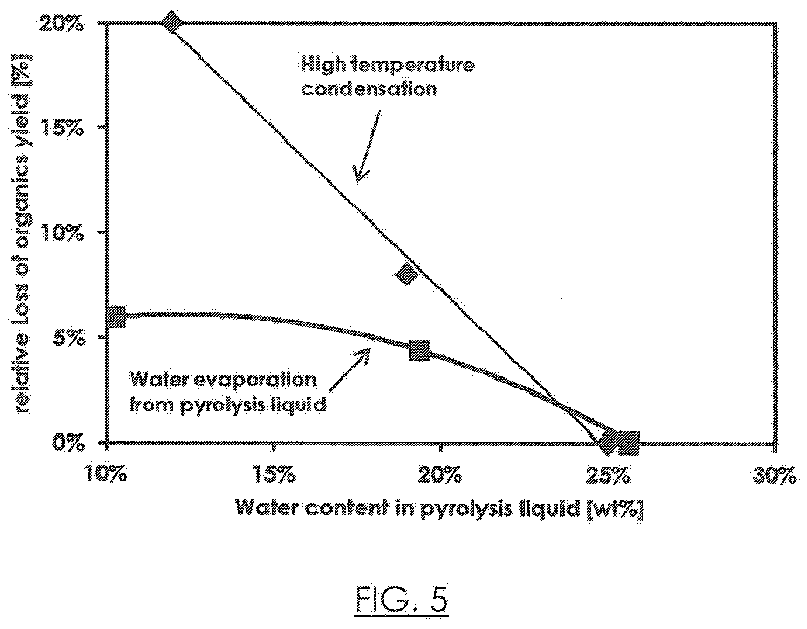

Pine wood has been pyrolysed in a fast pyrolysis unit at a feeding rate of 2 kg/hr. The moisture content of the pine wood was 5 wt%. The pyrolysis reactor temperature was in the range of 485 till 495 °C, and the pressure atmospheric. The vapour phase released was directed to a spray condenser which can be operated at temperatures up to 90 °C. In the condenser the pyrolysis liquid is collected including water. At low condenser temperature the highest amount of pyrolysis liquid is collected, but also the water content in the oil is at the highest level. By increasing the condenser temperature less water will end up in the oil, but also part of the organics will be lost, such as shown in figures 4 and 5. Alternatively, the method described in this application condenses the maximum amount of pyrolysis liquid by operating the condenser at low temperature, and separately water is evaporated from the pyrolysis liquid in a controlled manner. In this example the pyrolysis liquid was produced under the same conditions as described above, and the liquid was condensed at a temperature of 48 °C. This liquid collected contained 25.8 wt% of water. Subsequently, water was removed from the liquid in a rotary film evaporator. The operating conditions of the film evaporator were a temperature of 60 - 90 °C and a pressure of 100 mbar. Samples from the liquid were taken at different times and the water content determined. It has been found that the amount of organics lost by the latter method is significantly lower as illustrated in figures 4 and 5.

## Claims

1. Method for controlling the water content in a pyrolysis liquid comprising:
a) producing a pyrolysis vapour comprising condensable compounds and non-condensable gases at a temperature equal to, or below 70°C and at a pressure equal to or below 1.5 bar;
b) introducing the vapour phase in a condenser (102), condensing the condensable compounds of the pyrolysis vapour to obtain a condensate at a temperature equal to, or below, 70°C and at a pressure equal to or below 1.5 bar, and separating the non-condensable gases from the condensate;
c) introducing at least part of the condensate into concentrator (106) and concentrating said condensate by removing a certain amount of water at a temperature equal to, or below 80°C thereby obtaining a concentrate;
d) introducing the concentrate obtained after step c) into condenser (102) and mixing it with the condensate present in condenser (102) thereby obtaining a pyrolysis liquid with controlled water content.

2. Method according to claim 1, wherein the condensation in step b) is carried out at a temperature in the range 5°C to 70°C, preferably 10°C to 60°C, more preferably 20°C to 50°C.

3. Method according to claim 1 or 2, wherein the separation in step c) in carried out at a temperature in the range 10°C to 80°C, preferably 20°C to 70°C, more preferably 40°C to 70°C.

4. Method according to any one of claims 1 to 3, wherein the concentration in step c) is carried out at a pressure equal to, or below 500 mbar.

5. Method according to any one of claims 1 to 4, wherein the introducing the concentrate obtained after step c) into condenser (102) is carried out by spraying.

6. Method according to anyone of claims 1 to 5, wherein concentrator (106) is an evaporator.

7. Method according to any one of claims 1 to 6, wherein step a) produces energy that is used to carry out the separation in step c).

8. Method according to any one of claims 1 to 7, wherein a filtering step is carried out after any one of steps b, c or d.

9. Method according to any one of claims 1 to 8, wherein fast pyrolysis is carried out in step a).

10. Method according to any one of claims 1 to 9, wherein fast pyrolysis of vegetal biomass is carried out in step a).

11. Apparatus for carrying out the method as defined in any of claims 1 to 10 comprising:
1) a condenser (102) for a pyrolysis vapour comprising condensable compounds and non-condensable gases for obtaining the separation of the non-condensable gases from said vapour, said condenser (102) comprises at least two intakes, wherein at least one of the at least two intakes comprises at least one inlet for receiving the condensable compounds of the pyrolysis vapour and said condenser (102) comprises at least two discharge ends, said at least two discharge ends comprising at least one outlet, wherein at least one of the at least two discharge ends comprises at least one outlet for a non-condensable gases and wherein at least one of the at least two discharge ends comprises one outlet for a condensate, said condenser (102) is operable at a temperature equal to, or below 70°C, and at a pressure equal to or below 1.5 bar;
2) a concentrator (106) connected to said outlet for the condensate from condenser (102) for concentrating said condensate by removing a pre-determined amount of water, said concentrator (106) comprises at least one intake, said intake comprises at least one inlet for receiving the condensate produced in condenser (102) and said concentrator (106) comprises at least two discharge ends comprising at least one outlet, wherein at least one of the at least two discharge ends comprises at least one outlet for the concentrate connected to the condenser (102), said concentrator (106) is operable at a temperature equal to, or below 80°C, and at a pressure equal to or below 500 mbar,
wherein condenser (102) is connected to one of the outlet for the concentrate from said concentrator (106).

12. Apparatus according to claim 11, wherein the concentrator (106) is an evaporator.

13. Apparatus according to claim 11 or 12, wherein a reactor for producing a pyrolysis vapour is placed before the condenser (102), said reactor comprises at least one intake and at least one discharge end, said at least one intake comprise at least one inlet and said at least one discharge end comprises at least one outlet for said vapour and wherein the condenser (102) is connected to said outlet for said vapour from said reactor for obtaining the separation of the non-condensable gases from a condensate.

14. Apparatus according to any one of claims 11 to 13, wherein the condenser (102) is connected to one of the outlet for the concentrate from said concentrator (106) wherein the connection is located at the top of said condenser for spraying the concentrate obtained in the concentrator (106) .

## Patentansprüche

1. Verfahren zur Steuerung des Wassergehalts in einer Pyrolyseflüssigkeit, umfassend:
a) Erzeugen eines Pyrolysedampfes, der kondensierbare Verbindungen und nicht-kondensierbare Gase bei einer Temperatur von gleich oder unterhalb 70°C und bei einem Druck von gleich oder unterhalb 1,5bar umfasst,
b) Einführen der Dampfphase in einen Kondensator (102), Kondensieren der kondensierbaren Verbindungen des Pyrolysedampfes, um ein Kondensat bei einer Temperatur von gleich oder unterhalb 70°C und bei einem Druck von gleich oder unterhalb eines 1,5bar zu erhalten, und Trennen der nicht-kondensierbaren Gase von dem Kondensat,
c) Einführen zumindest eines Teiles des Kondensats in einen Konzentrator (106) und Konzentrieren des Kondensats durch Entfernen einer gewissen Wassermenge bei einer Temperatur von gleich oder unterhalb 80°C, um dadurch ein Konzentrat zu erhalten,
d) Einführen des nach dem Schritt c) erhaltenen Konzentrats in den Kondensator (102) und Mischen des betreffenden Konzentrats mit dem in dem Kondensator (102) vorhandenen Kondensat, um dadurch eine Pyrolyseflüssigkeit mit einem gesteuerten Wassergehalt zu erhalten.

2. Verfahren nach Anspruch 1, wobei die Kondensation beim Schritt b) bei einer Temperatur im Bereich von 5°C bis 70°C vorzugsweise von 10°C bis 60°C und bevorzugter von 20°C bis 50°C ausgeführt wird.

3. Verfahren nach Anspruch 1 oder 2, wobei das Trennen beim Schritt c) bei einer Temperatur im Bereich von 10°C bis 80°C, vorzugsweise von 20°C bis 70°C und bevorzugter von 40°C bis 70°C ausgeführt wird.

4. Verfahren nach einem der Ansprüche 1 bis 3, wobei die Konzentration beim Schritt c) bei einem Druck von gleich oder unter 500mbar ausgeführt wird.

5. Verfahren nach einem der Ansprüche 1 bis 4, wobei das Einführen des nach dem Schritt c) erhaltenen Konzentrats in den Kondensator (102) durch Sprühen ausgeführt wird.

6. Verfahren nach einem der Ansprüche 1 bis 5, wobei der Konzentrator (106) ein Verdampfer ist.

7. Verfahren nach einem der Ansprüche 1 bis 6, wobei der Schritt a) Energie erzeugt, die zum Ausführen des Trennens beim Schritt c) genutzt wird.

8. Verfahren nach einem der Ansprüche 1 bis 7, wobei nach irgendeinem der Schritte b), c) oder d) ein Filtrierungsschritt ausgeführt wird.

9. Verfahren nach einem der Ansprüche 1 bis 8, wobei beim Schritt a) eine schnelle Pyrolyse ausgeführt wird.

10. Verfahren nach einem der Ansprüche 1 bis 9, wobei beim Schritt a) eine schnelle Pyrolyse einer pflanzlichen Biomasse ausgeführt wird.

11. Vorrichtung zur Ausführung des Verfahrens nach einem der Ansprüche 1 bis 10, umfassend:
1) einen Kondensator (102) für einen Pyrolysedampf, umfassend kondensierbare Verbindungen und nicht-kondensierbare Gase, um die Trennung der nicht-kondensierbaren Gase von dem Dampf zu erzielen, wobei der Kondensator (102) zumindest zwei Einlassöffnungen umfasst, wobei zumindest einer der zumindest zwei Einlassöffnungen zumindest einen Einlass zur Aufnahme der kondensierbaren Verbindungen des Pyrolysedampfes umfasst und der Kondensator (102) zumindest zwei Abführenden umfasst, wobei die zumindest zwei Abführenden zumindest einen Auslass umfassen, wobei zumindest einer der zumindest zwei Abführenden zumindest einen Auslass für nicht-kondensierbare Gase umfasst und wobei zumindest eines der zumindest zwei Abführenden einen Auslass für ein Kondensat umfasst, wobei der Kondensator (102) bei einer Temperatur von gleich oder unter 70°C und bei einem Druck von gleich oder unter 1,5bar betreibbar ist,
2) einen Konzentrator (106), der mit dem Auslass für das Kondensat von dem Kondensator (102) zum Konzentrieren des Kondensats durch Entfernen einer bestimmten Wassermenge verbunden ist, wobei der Konzentrator (106) zumindest eine Einlassöffnung umfasst, wobei die Einlassöffnung zumindest einen Einlass zur Aufnahme des in dem Kondensator (102) erzeugten Kondensats umfasst und der Konzentrator (106) zumindest zwei Abführenden umfasst, die zumindest einen Auslass umfassen, wobei zumindest einer der zumindest zwei Abführenden zumindest einen mit dem Kondensator (102) verbundenen Auslass für das Konzentrat umfasst, wobei der Konzentrator (106) bei einer Temperatur von gleich oder unter 80°C und bei einem Druck von gleich oder unter 500mbar betreibbar ist,
wobei der Kondensator (102) mit dem einen Auslass für das Konzentrat von dem Konzentrator (106) verbunden ist.

12. Vorrichtung nach Anspruch 11, wobei der Konzentrator (106) ein Verdampfer ist.

13. Vorrichtung nach Anspruch 11 oder 12, wobei ein Reaktor zur Erzeugung eines Pyrolysedampfes vor dem Kondensator (102) platziert ist,
wobei der Reaktor zumindest eine Einlassöffnung und zumindest ein Abführende umfasst,
wobei die zumindest eine Einlassöffnung zumindest einen Einlass umfasst und das zumindest eine Abführende zumindest einen Auslass für den Dampf umfasst und wobei der Kondensator (102) mit dem Auslass für den Dampf von dem Reaktor verbunden ist, um die Trennung der nicht-kondensierbaren Gase von einem Kondensat zu erzielen.

14. Vorrichtung nach einem der Ansprüche 11 bis 13, wobei der Kondensator (102) mit dem einen Auslass für das Konzentrat von dem Konzentrator (106) verbunden ist, wobei die Verbindung oberhalb des Kondensators zum Sprühen des in dem Konzentrator (106) erzielten Konzentrats liegt.

## Revendications

1. Procédé de régulation de la teneur en eau d'un liquide de pyrolyse, consistant à :
a) produire une vapeur de pyrolyse comprenant des composés condensables et des gaz non condensables à une température inférieure ou égale à 70 °C et à une pression inférieure ou égale à 1,5 bar ;
b) introduire la phase vapeur dans un condensateur (102), condenser les composés condensables de la vapeur de pyrolyse pour obtenir un condensat à une température inférieure ou égale à 70 °C et à une pression inférieure ou égale à 1,5 bar, et séparer les gaz non condensables du condensat ;
c) introduire au moins une partie du condensat dans un concentrateur (106) et concentrer ledit condensat pour éliminer une certaine quantité d'eau à une température inférieure ou égale à 80 °C, obtenant ainsi un concentré ;
d) introduire le concentré obtenu après l'étape c) dans le condensateur (102) et le mélanger avec le condensat présent dans le condensateur (102), obtenant ainsi un liquide de pyrolyse avec une teneur en eau régulée.

2. Procédé selon la revendication 1, dans lequel la condensation de l'étape b) est réalisée à une température comprise dans la plage allant de 5 °C à 70 °C, de préférence de 10 °C à 60 °C, plus préférablement de 20 °C à 50 °C.

3. Procédé selon la revendication 1 ou 2, dans lequel la séparation de l'étape c) est réalisée à une température comprise dans la plage allant de 10 °C à 80 °C, de préférence de 20 °C à 70 °C, plus préférablement de 40 °C à 70 °C.

4. Procédé selon l'une quelconque des revendications 1 à 3, dans lequel la concentration de l'étape c) est réalisée à une pression inférieure ou égale à 500 mbar.

5. Procédé selon l'une quelconque des revendications 1 à 4, dans lequel l'introduction du concentré obtenu après l'étape c) dans le condensateur (102) est réalisée par pulvérisation.

6. Procédé selon l'une quelconque des revendications 1 à 5, dans lequel le concentrateur (106) est un évaporateur.

7. Procédé selon l'une quelconque des revendications 1 à 6, dans lequel l'étape a) produit une énergie qui est utilisée pour réaliser la séparation de l'étape c).

8. Procédé selon l'une quelconque des revendications 1 à 7, dans lequel une étape de filtration est réalisée après l'une quelconque des étapes b, c ou d.

9. Procédé selon l'une quelconque des revendications 1 à 8, dans lequel une pyrolyse rapide est réalisée dans l'étape a).

10. Procédé selon l'une quelconque des revendications 1 à 9, dans lequel une pyrolyse rapide d'une biomasse végétale est réalisée dans l'étape a).

11. Appareil pour réaliser le procédé tel que défini selon l'une quelconque des revendications 1 à 10, comprenant :
1) un condensateur (102) pour une vapeur de pyrolyse comprenant des composés condensables et des gaz non condensables pour obtenir la séparation des gaz non condensables de ladite vapeur, ledit condensateur (102) comprend au moins deux entrées, au moins une desdites au moins deux entrées comprenant au moins un orifice d'entrée pour recevoir les composés condensables de la vapeur de pyrolyse et ledit condensateur (102) comprend au moins deux extrémités d'évacuation, lesdites au moins deux extrémités d'évacuation comprenant au moins un orifice de sortie, au moins une des au moins deux extrémités d'évacuation comprenant au moins un orifice de sortie pour des gaz non condensables et au moins une des au moins deux extrémités d'évacuation comprenant un orifice de sortie pour un condensat, ledit condensateur (102) fonctionnant à une température inférieure ou égale à 70 °C et à une pression inférieure ou égale à 1,5 bar ;
2) un concentrateur (106) raccordé audit orifice de sortie pour le condensat du condensateur (102) pour concentrer ledit condensat en éliminant une quantité prédéterminée d'eau, ledit concentrateur (106) comprenant au moins une entrée, ladite entrée comprenant au moins un orifice d'entrée pour recevoir le condensat produit dans le condensateur (102) et ledit concentrateur (106) comprenant au moins deux extrémités d'évacuation comprenant au moins un orifice de sortie, au moins une des au moins deux extrémités d'évacuation comprenant au moins un orifice de sortie pour le concentré, raccordé au condensateur (102), ledit concentrateur (106) fonctionnant à une température inférieure ou égale à 80 °C et à une pression inférieure ou égale à 500 mbars,
le condensateur (102) étant raccordé à l'un des orifices de sortie pour le concentré dudit concentrateur (106).

12. Appareil selon la revendication 11, dans lequel le concentrateur (106) est un évaporateur.

13. Appareil selon la revendication 11 ou 12, dans lequel un réacteur pour produire une vapeur de pyrolyse est placé avant le condensateur (102), ledit réacteur comprend au moins une entrée et au moins une extrémité d'évacuation, ladite au moins une entrée comprend au moins un orifice d'entrée et ladite au moins une extrémité d'évacuation comprend au moins un orifice de sortie pour ladite vapeur et le condensateur (102) est raccordé audit orifice de sortie pour ladite vapeur dudit réacteur pour obtenir la séparation des gaz non condensables d'un condensat.

14. Appareil selon l'une quelconque des revendications 11 à 13, dans lequel le condensateur (102) est raccordé à l'un des orifices de sortie pour le concentré dudit concentrateur (106), le raccord étant situé en haut dudit condensateur pour la pulvérisation du concentré obtenu dans le concentrateur (106).
